# EUROPÄISCHE PATENTSCHRIFT

(11) **EP 3 116 963 B1**
(45) Veröffentlichungstag und Bekanntmachung des Hinweises auf die Patenterteilung: **11.04.2018**
(21) Anmeldenummer: 15710444.9
(22) Anmeldetag: 24.02.2015
(51) Int. Cl.: C09D 175/04, C09D 5/08, C08G 18/76, C09D 5/10, C08G 18/30, F16C 33/00, B32B 27/40, C08K 5/49, C08K 3/22, F16C 33/20, C08K 5/54, C08K 5/5317, C08K 3/08, C08K 3/00

(54) **KORROSIONSSCHÜTZENDES SCHICHTSYSTEM, KORROSIONSGESCHÜTZTES LAGERBAUTEIL UND VERFAHREN ZUM SCHUTZ EINES LAGERBAUTEILS VOR KORROSION**
CORROSION RESISTANT LAYER SYSTEM;CORROSION-PROTECTED BEARING COMPONENTS; PROCESS FOR PROTECTION OF A BEARING PART AGAINST CORROSION.
SYSTÈME À COUCHES PROTÉGÉ CONTRE LA CORROSION; COMPOSANTS PALIER AVEC PROTECTION CONTRE LA CORROSION; PROCÉDÉ DE TRAITEMENT D'UN COMPOSANT PALIER CONTRE LA CORROSION

(30) Priorität: 10.03.2014 DE 102014204329
(43) Veröffentlichungstag der Anmeldung: 18.01.2017
(73) Patentinhaber: Aktiebolaget SKF, 415 50 Göteborg (SE)
(72) Erfinder: VON SCHLEINITZ, Thilo, 97422 Schweinfurt (DE)
(74) Vertreter: Kuhstrebe, Jochen
(86) Internationale Anmeldenummer: PCT/EP2015/053809
(87) Internationale Veröffentlichungsnummer: WO 2015/135745

(56) Entgegenhaltungen:
- EP-A1- 2 145 760
- DE-A1- 2 855 120
- DE-B3-102012 212 688

## Beschreibung

Die Erfindung betrifft ein korrosionsschützendes Schichtsystem und ein korrosionsgeschütztes Lagerbauteil. Weiterhin betrifft die Erfindung ein Verfahren zum Schutz eines Lagerbauteils vor Korrosion.

Lager sind mitunter korrosiven Umweltbedingungen ausgesetzt. Dies trifft beispielsweise für Lager zu, die in Windkraftanlagen eingebaut werden und konstruktionsbedingt oder aus Kostengründen nicht in ein Gehäuse eingebaut werden, das beispielsweise vor Wettereinflüssen schützt. Besonders problematisch ist die Situation bei Windkraftanlagen die unmittelbar an der Küste oder sogar auf See errichtet werden. In diesem Fall können die Lager mit hochkorrosivem Salzwasser oder mit Salzwassernebel in Kontakt kommen.

Zum Schutz vor Korrosion können die Lager mit einer Beschichtung versehen werten. Als Korrosionsschutzbeschichtungen kommen in der Regel Lacke auf Epoxidharz-Basis zum Einsatz. Alternativ kann eine Beschichtung durch thermisches Zinkspritzen, also Zinkflammspritzen oder Zinkplasmaspritzen, erfolgen.

Um einen zuverlässigen Korrosionsschutz zu gewährleisten ist es erforderlich, dass die Beschichtung fest am Untergrund haftet. Hierfür ist in der Regel eine Vorbereitung des Untergrunds Voraussetzung. Eine bekannte Maßnahme zur Erzielung einer guten Haftung einer Beschichtung besteht darin, die zu beschichtende Oberfläche aufzurauen. Das Aufrauen erfolgt in vielen Fällen durch eine Strahlbehandlung der zu beschichtenden Oberfläche. Hierzu werden abrasive Partikel, beispielsweise Korund-Partikel, gegen die zu beschichtende Oberfläche geschleudert. Eine Strahlbehandlung eines Lagerbauteils birgt allerdings das Risiko, dass verbleibende abrasive Partikel das Lager im Betrieb schädigen bzw. ist mit einem sehr hohen Aufwand für eine möglichst vollständige Entfernung der abrasiven Partikel vom Lagerbauteil verbunden. Selbst ein Abdecken der Funktionsflächen führt bei Entfernen der Abdeckungen zu Rückverschmutzung, da überall lose Partikel anlagern. Auch beim Zinkspritzen entstehen abrasive Partikel in Form von nicht an die Oberfläche gebundenen Metallpartikeln.

Aus der DE102012212688B3 ist ein Verfahren zum Schutz eines Lagerbauteils gegen Korrosion bekannt, das ohne eine Vorbehandlung der zu schützenden Oberflächen mit abrasiven Partikeln auskommt. Bei dem bekannten Verfahren werden nacheinander mehreren Grundschichten eines ersten Lacks auf Polyurethan-Basis, dem Zink zugesetzt ist, aufgetragen. Auf die zuletzt aufgetragene Grundschicht wird eine Deckschicht eines zweiten Lacks auf Polyurethan-Basis, dem Eisenglimmer zugesetzt ist, aufgetragen.

Das aus der DE102012212688B3 bekannte Verfahren bietet einen guten Korrosionsschutz und vermeidet zugleich das mit dem Einsatz von abrasiven Partikeln verbundene Risiko einer späteren Schädigung des Lagers.

Mitunter wir allerdings ein noch besserer Korrosionsschutz benötigt, als mit dem bekannten Verfahren erzielbar ist. Beispielsweise wird bei Lagern von Windturbinen in maritimer Umgebung teilweise ein störungsfreier Betrieb von bis zu 25 Jahren gefordert.

Der Erfindung liegt daher die Aufgabe zugrunde, einen hoch wirksamen und wirtschaftlichen Korrosionsschutz insbesondere für ein Lagerbauteil zu erzielen und gleichzeitig möglichst zu vermeiden, dass durch die Korrosionsschutzbehandlung Folgeschäden hervorgerufen werden.

Diese Aufgabe wird durch die Merkmalskombinationen der nebengeordneten Ansprüche gelöst.

Das korrosionsschützende Schichtsystem gemäß der Erfindung weist eine Grundschicht, eine Zwischenschicht, eine Deckschicht und eine Versiegelungsschicht auf. Die Grundschicht enthält Polyurethan, Zink und Vinylphosphonsäure oder Silan. Die Zwischenschicht ist auf der Grundschicht ausgebildet und enthält Polyurethan und Zink. Die Deckschicht ist auf der Zwischenschicht ausgebildet und enthält Polyurethan und Eisenglimmer. Die Versiegelungsschicht ist auf der Deckschicht ausgebildet und enthält Polyurethan.

Die Erfindung hat den Vorteil, dass sie einen hoch wirksamen Korrosionsschutz gewährleistet und mit vertretbarem Aufwand realisierbar ist. Auch unter extrem korrosiven Umweltbedingungen bietet das erfindungsgemäße Schichtsystem über einen langen Zeitraum einen zuverlässigen Korrosionsschutz.

Die Grundschicht kann insbesondere Trimethoxysilan enthalten.

Die Grundschicht, die Zwischenschicht, die Deckschicht und die Versiegelungsschicht können hinsichtlich ihrer Polyurethan-Basis identisch ausgebildet sein. Dadurch können Versprödungen, die durch Diffusion von Lackbestandteilen in die jeweilige Nachbarschicht entstehen können und Spannungen, die zu einem Anheben und Abplatzen von Schichten führen können, besonders zuverlässig vermieden werden.

Weiterhin können die Grundschicht, die Zwischenschicht, die Deckschicht und die Versiegelungsschicht hinsichtlich wenigstens eines Inhaltsstoffs unterschiedlich zueinander ausgebildet sein.

Die Zwischenschicht und/oder die Deckschicht können aus mehreren Teilschichten ausgebildet sein. Dies hat den Vorteil, dass die Durchtrocknung beim Aufbringen der Zwischenschicht bzw. der Deckschicht verbessert wird. Außerdem wird die Porendurchgängigkeit verringert und es werden die inneren Spannungen, die im Extremfall zu einer Schichtablösung führen können, reduziert. Weiterhin kann für die Vernetzung benötigter Wasserdampf leichter eindiffundieren und Reaktionsnebenprodukte und Gase können leichter ausdiffundieren.

Die Versiegelungsschicht kann einen Anteil an Pigmenten oder sonstigen Partikeln von maximal 10 Vol% aufweisen. Insbesondere kann die Versiegelungsschicht im Wesentlichen aus Polyurethan-Bindemittel bestehen. Durch einen möglichst geringen Anteil an Partikeln kann die Versiegelungsschicht besonders glatt ausgebildet werden und weist eine hohe Diffusionsdichtigkeit auf.

Weiterhin kann die Versiegelungsschicht hydrophob ausgebildet sein.

Das Schichtsystem kann eine Gesamtdicke von wenigstens 300 µm aufweisen. Insbesondere kann das Schichtsystem eine Gesamtdicke von wenigstens 400 µm aufweisen. Weiterhin kann das Schichtsystem eine Gesamtdicke von maximal 600 µm aufweisen.

Die Erfindung betrifft weiterhin ein Lagerbauteil mit einem Oberflächenbereich, der das Korrosionsschützende Schichtsystem aufweist.

Der Oberflächenbereich ist vorzugsweise nicht gestrahlt. Dadurch lässt sich der Herstellungsaufwand reduzieren und das Risiko einer Schädigung eines mit dem Lagerbauteil hergestellten Lagers durch abrasive Partikel reduzieren.

Das Lagerbauteil kann als ein Lagerring, insbesondere als ein Innenring oder ein Außenring, insbesondere eines Wälzlagers oder eines Gleitlagers, ausgebildet sein.

Außerdem betrifft die Erfindung ein Lager mit dem erfindungsgemäßen Lagerbauteil. Das Lager kann als ein Großlager ausgebildet sein. Insbesondere kann das Lager als eine Komponente einer Windkraftanlage ausgebildet sein.

Weiterhin betrifft die Erfindung ein Verfahren zum Schutz eines Lagerbauteils vor Korrosion. Beim erfindungsgemäßen Verfahren wird zur Ausbildung einer Grundschicht auf einen Oberflächenbereich des Lagerbauteils ein erster Lack auf Polyurethan-Basis, dem Zink und Vinylphosphonsäure oder Silan zugesetzt sind, aufgetragen. Anschließend wird zur Ausbildung einer Zwischenschicht auf die Grundschicht ein zweiter Lack auf Polyurethan-Basis, dem Zink zugesetzt ist, aufgetragen. Danach wird zur Ausbildung einer Deckschicht auf die Zwischenschicht ein dritter Lack auf Polyurethan-Basis, dem Eisenglimmer zugesetzt ist, aufgetragen. Schließlich wird zur Ausbildung einer Versiegelungsschicht auf die Deckschicht ein vierter Lack auf Polyurethan-Basis aufgetragen.

Der erste, zweite, dritte und vierte Lack kann mittels einer Farbrolle aufgetragen werden oder aufgesprüht werden.

Zur Ausbildung der Zwischenschicht kann der zweite Lack und/oder zur Ausbildung der Deckschicht kann der dritte Lack in mehreren Teilschichten aufgetragen werden.

Als erster Lack, als zweiter Lack, als dritter Lack und als vierter Lack kann ein reaktiv vernetzender Einkomponenten-Lack verwendet werden. Hierunter ist ein reaktiv vernetzender Lack zu verstehen, dessen erste Reaktionskomponente im Lack enthalten ist und dessen zweite Reaktionskomponente in der Umgebung des Lackauftrags verfügbar ist. Der Begriff Einkomponenten-Lack wurde somit im Hinblick auf die Anzahl der im Lack enthaltenen Reaktionskomponenten und nicht im Hinblick auf die insgesamt an der der Reaktion beteiligten Reaktionskomponenten gewählt. Ein derartiger Lack lässt sich mit sehr wenig Aufwand und ohne Mischfehlerrisiko verarbeiten. Bei der zweiten Reaktionskomponente kann es sich beispielsweise um Wasserdampf handeln.

Als erster Lack, als zweiter Lack, als dritter Lack und als vierter Lack kann ein feuchtigkeitshärtender Lack verwendet werden. Dies hat den Vorteil, dass das Fortschreiten des Härteprozesses bei bekannter Luftfeuchtigkeit sehr leicht abgeschätzt werden kann.

Der erste Lack und/oder der zweite Lack und/oder der dritte Lack und/oder der vierte Lack kann mittels einer Rolle aufgetragen werden.

Die Erfindung wird nachstehend anhand des in der Zeichnung dargestellten Ausführungsbeispiels erläutert.

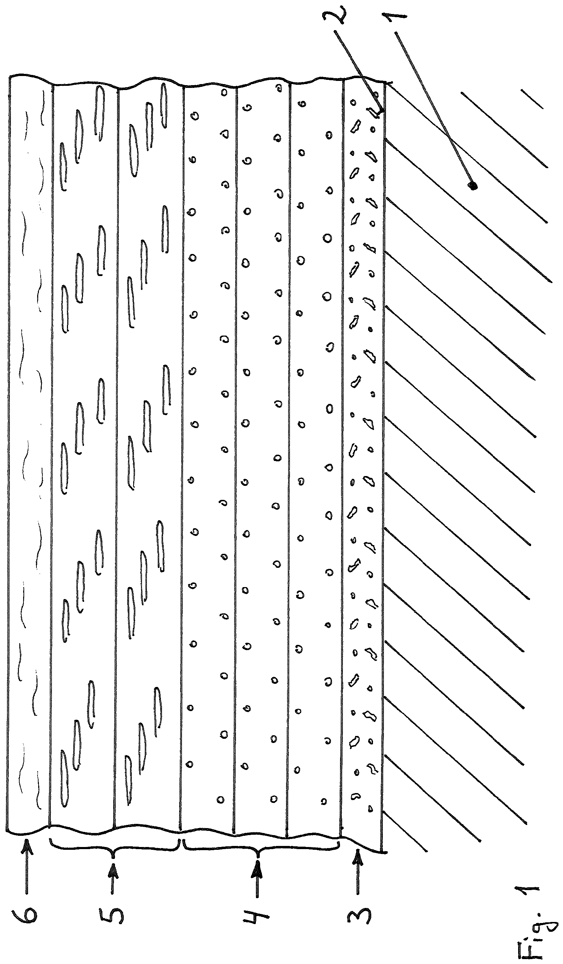

Figur 1 zeigt eine schematische Darstellung eines Ausführungsbeispiels eines beschichteten Lagerbauteils 1. Die Darstellung ist stark vereinfacht und nicht maßstäblich und zeigt lediglich einen Ausschnitt des Lagerbauteils 1. Bei dem Lagerbauteil 1 kann es sich beispielsweise um einen Lagerring eines Wälz- oder Gleitlagers usw. handeln. Insbesondere ist das Lagerbauteil 1 als Komponente eines Großlagers einer Windkraftanlage oder einer anderen großen Maschine ausgebildet. Das Lagerbauteil 1 kann aus Stahl, insbesondere aus Wälzlagerstahl, hergestellt sein.

Auf einen Oberflächenbereich 2 des Lagerbauteils 1 ist eine Grundschicht 3 aufgebracht. Der Oberflächenbereich 2 kann sich über die gesamte Oberfläche des Lagerbauteils 1 ausgenommen nicht figürlich dargestellter Lauf- und Gleitbahnen oder lediglich über einen Teilbereich der Oberfläche des Lagerbauteils 1 erstrecken. Die Grundschicht 3 enthält Polyurethan, Zink und Vinylphosphonsäure.

Alternativ zur Vinylphosphonsäure kann die Grundschicht 3 ein Silan, insbesondere Trimethoxysilan, enthalten. Die Vinylphosphonsäure und das Silan wirken als Haftvermittler oder als Haftverstärker. Das Silan bildet molekulare Brücken zwischen organischem Polymer wie beispielsweise Polyurethan und anorganischem Substrat wie beispielsweise Stahl. Die Vinylphosphonsäure lagert sich an anorganischen Oberflächen wie beispielsweise Stahl an und bietet dadurch eine bessere Anbindung von organischem Polymer wie beispielsweise Polyurethan. Insgesamt kann die Grundschicht 3 20 bis 40 Vol% Binder enthalten. Die Mengenangaben beziehen sich hier und auch im Folgenden jeweils auf die abgetrocknete Schicht. Der Zinkgehalt kann etwa 60 bis 90 Vol% betragen. Weitere partikelförmige Zusatzstoffe sind allenfalls in geringen Mengen in der Grundschicht 3 enthalten. Vorzugsweise enthält die Grundschicht 3 keine weiteren partikelförmigen Zusatzstoffe.

Die Grundschicht 3 kann eine Dicke von 50 µm aufweisen. Der bevorzugte Bereich der Schichtdicke liegt zwischen 40 µm und 80 µm. Wird die Schichtdicke zu gering gewählt, besteht keine ausreichende Haftvermittlung.

Auf der Grundschicht 3 ist eine Zwischenschicht 4 angeordnet. Die Zwischenschicht 4 enthält Polyurethan und Zink. Bei der Zwischenschicht 4 kann das gleiche Polyurethansystem wie bei der Grundschicht 3 zum Einsatz kommen. Auch der Zinkgehalt kann analog zur Grundschicht 3 oder etwas höher gewählt werden, wobei aber der Bereich von etwa 60 bis 90 Vol% beibehalten wird. Bei erhöhtem Zinkgehalt ist der Binderanteil entsprechend reduziert. Weitere partikelförmige Zusatzstoffe zusätzlich zu Zink sind in der Zwischenschicht 4 allenfalls in geringen Mengen enthalten. Vorzugsweise enthält die Zwischenschicht 4 keine weiteren partikelförmigen Zusatzstoffe. Die Zwischenschicht 4 kann aus mehreren Teilschichten bestehen. Beim dargestellten Ausführungsbeispiel besteht die Zwischenschicht 4 aus drei Teilschichten. Jede Teilschicht kann eine Dicke von ca. 40 µm bis 80 µm aufweisen. Somit ergibt sich beim dargestellten Ausführungsbeispiel eine Dicke der Zwischenschicht 4 von ca. 120 µm bis ca. 240 µm. Typischerweise beträgt die Dicke der Zwischenschicht 4 ca. 195 µm. Die Zwischenschicht 4 ist somit deutlich dicker als die Grundschicht 3.

Auf der Zwischenschicht 4 ist eine Deckschicht 5 angeordnet. Die Deckschicht 5 kann Polyurethan und Eisenglimmer aufweisen. Bei der Deckschicht 5 kann das gleiche Polyurethansystem wie bei der Grundschicht 3 zum Einsatz kommen. Der Eisenglimmergehalt kann etwa 60 bis 90 Vol% betragen. Der Binderanteil kann bis maximal 40 Vol% betragen. Weitere partikelförmige Zusatzstoffe zusätzlich zu Eisenglimmer sind in der Deckschicht 5 allenfalls in geringen Mengen enthalten. Vorzugsweise enthält die Deckschicht 5 keine weiteren partikelförmigen Zusatzstoffe. Die Deckschicht 5 kann aus mehreren Teilschichten bestehen. Beim dargestellten Ausführungsbeispiel besteht die Deckschicht 5 aus zwei Teilschichten. Jede Teilschicht kann eine Dicke von ca. 60 µm bis 90 µm aufweisen. Somit ergibt sich beim dargestellten Ausführungsbeispiel eine Dicke der Deckschicht 5 von ca. 120 µm bis ca. 180 µm. Typischerweise beträgt die Dicke der Deckschicht 5 ca. 160 µm.

Auf der Deckschicht 5 ist eine Versiegelungsschicht 6 aus Polyurethan angeordnet. Bei der Versiegelungsschicht 6 kann das gleiche Polyurethansystem wie bei der Grundschicht 3 zum Einsatz kommen. Pigmente oder sonstige partikelförmige Zusatzstoffe sind in der Versiegelungsschicht 6 allenfalls in geringen Mengen, insbesondere mit einem Anteil von insgesamt weniger als 10 Vol%, vorhanden. Vorzugsweise enthält die Versiegelungsschicht 6 keine Pigmente oder sonstige partikelförmige Zusatzstoffe. Demgemäß kann der Binderanteil bis zu 100 Vol% betragen. Die Versiegelungsschicht 6 kann eine Dicke von ca. 30 µm bis ca. 70 µm, vorzugsweise 40 µm bis 60 µm, aufweisen. Typischerweise beträgt die Dicke der Versiegelungsschicht 6 ca. 50 µm.

Aus den vorstehenden Ausführungen geht hervor, dass sich die einzelnen Schichten insbesondere auch hinsichtlich des Binderanteils unterscheiden. Der Binder wirkt wie ein Klebstoff und sorgt für den inneren Zusammenhalt der Schichten und für die Haftung der Schichten am jeweiligen Untergrund. Ein hoher Binderanteil ergibt tendenziell einen hohen Zusammenhalt und eine gute Haftung. Ein niedriger Binderanteil ergibt tendenziell einen niedrigen Zusammenhalt und eine weniger gute Haftung. Andererseits lässt ein hoher Binderanteil aber lediglich einen entsprechend geringen Anteil an funktionalen Partikeln wie Zink oder Eisenglimmer zu, so dass die Eigenschaften dieser Partikel nur eingeschränkt oder gar nicht wirksam werden können.

Aus diesem Zusammenspiel ergibt sich der Vergleichsweise hohe Binderanteil der Grundschicht 3, da für die Grundschicht 3 eine gute Haftung am Lagerbauteil 2 wichtig ist. Die Zwischenschicht 4 kann einen geringeren Binderanteil aufweisen als die Grundschicht 3, da sie auf die Grundschicht 3 aufgebracht ist und daher von Vorneherein günstigere Bedingungen für die Haftung vorfindet als die Grundschicht 3. Entsprechend ist in der Zwischenschicht 4 mehr Zink vorhanden als in der Grundschicht 3. Bei der Deckschicht 5 ist ein ausreichend hoher Anteil an Eisenglimmer wichtig, um mit den Eisenglimmer-Plättchen eine möglichst dichte Schicht auszubilden. Entsprechend wird der Binderanteil in der Deckschicht 5 reduziert. Die Versiegelungsschicht 6 soll einen hohen Zusammenhalt und eine hohe Elastizität aufweisen, um einen zuverlässigen und dauerhaften Schutz auszubilden. Dies korreliert mit einem hohen Binderanteil und einem allenfalls geringen Anteil an Zusatzstoffen wie Pigmenten, welche die Elastizität der Versiegelungsschicht 6 herabsetzen würden.

Das in Figur 1 dargestellte Schichtsystem stellt einen sehr wirksamen Korrosionsschutz dar. Es lässt sich damit auf geschliffenen und ungestrahlten Oberflächen die Stufe C5MH nach DIN EN ISO 12944-2:2000 erreichen. Dabei handelt es sich um die derzeit schwerste Anforderungsklasse an Lacksysteme im Luftbereich, wobei die einzelnen Symbole der Kennung folgende Bedeutung haben: Der Buchstabe C gibt an, dass es sich um atmosphärische Umgebungsbedingungen handelt, d.h. nicht untergetaucht und nicht im Erdreich. Die Ziffer 5 bezeichnet die höchste atmosphärische Korrosivitätsklasse. Der Folgebuchstabe M gibt an, dass es sich um die höchste atmosphärische Korrosivitätsklasse unter maritimen Bedingungen handelt, d.h. Küsten- und Offshore-Bereich mit hoher Salzbelastung. In dieser Klasse gibt es wiederum die Unterteilungen L, M, H je nach der Anzahl Jahre, in denen die Beschichtung unter den spezifizierten Rahmenbedingungen standhält. Der Buchstabe H bezeichnet dabei die höchste Klasse (H=high) mit einer Schutzdauer grösser 15 Jahre.

Lacksysteme müssen, um solchen extremen Anforderungen zu entsprechen, üblicherweise mit hoher Dicke aufgetragen werden. Diese hohe Dicke führt jedoch zu Folgeproblemen wie Haftungsverlust, Versprödung oder Rissbildung. Dabei wird oftmals insbesondere die Anbindung der Grundschicht 3 an das metallische Substrat trotz Sandstrahlvorbehandlung durch die hohe aufliegende Schichtdicke und ihre inneren Spannungen überlastet. Zu geringe Schichtdicken hingegen sind nicht ausreichend diffusionsdicht.

Zwischen dem Erreichen von beispielsweise C4-Klassen oder C5L (2 bis 5 Jahre) und der höchsten Klasse C5H (>15 Jahre) liegt ein sehr großer Anforderungsunterschied.

Das hier beschriebene Schichtsystem erreicht C5-M-H selbst auf geschliffenen ungestrahlten Stahloberflächen. Dabei handelt es sich um ein bisher unübliches Resultat.

Dieses Resultat beruht einerseits auf einer sehr hohen Haftwirkung und Spannungsausgleichsfähigkeit der Grundschicht 3. Wichtige Beiträge zur Erzielung dieses Resultats liefern zudem die opferanodische Zwischenschicht 4, die Deckschicht 5, welche die Zwischenschicht 4 schützt und die Versiegelungsschicht 6, welche die Deckschicht 5 versiegelt.

Im Einzelnen ergibt sich der extrem gute Korrosionsschutz des erfindungsgemäßen Schichtsystems auf folgende Weise:
Die Versiegelungsschicht 6, die sehr glatt und hydrophob ausgebildet ist, schirmt jeglichen Umwelteinfluss ab und stellt Diffusionsdichtigkeit her. Bei Überwinden dieser Barriere wirkt die Deckschicht 5 als eine weitere Barriere. Die Deckschicht 5 weist ein durch überlappende Platten panzerartig ausgebildetes Eisenglimmersystem auf, das wegen der hohen Härte des Eisenglimmers insbesondere auch mechanisch sehr stabil ist. Außerdem wird durch die plättchenartige Form des Eisenglimmers eine hohe Diffusionsdichtigkeit erreicht, so dass kaum Wasserdampf bis zur Zwischenschicht 4 und insbesondere zu den darin enthaltenen Zink-Partikeln vordringen kann. Erst nach Überwinden dieser weiteren Barriere kommt die anodische Schutzwirkung des Zinks in der Zwischenschicht 4 zum Tragen, d.h. das Zink wird in einem sehr späten Stadium überhaupt erst genutzt, die vorherigen Barrieren basieren auf einer Abschirmung vor schädlichen Umwelteinflüssen. Die Grundschicht 3 sorgt für eine extrem gute Haftung des Schichtsystems an der Oberfläche des Lagerbauteils 1 und für eine Unterwanderungs- und Abschälhemmung. Außerdem weist die Grundschicht 3 eine hohe Tragfähigkeit und Elastizität auf.

Das erfindungsgemäße Schichtsystem weist durch die besondere Zusammensetzung und die Kombination der Einzelschichten eine im Verhältnis zur hohen Klassifikation eher unterdurchschnittliche Gesamtdicke auf und besitzt hohe Leistungsreserven auch bei partieller Beschädigung und mechanischer oder chemischer Einwirkung.

Zur Ausbildung des in Figur 1 dargestellten oder eines ähnlichen Schichtsystems kann folgendermaßen vorgegangen werden:
Das Lagerbauteil 1, dessen Oberfläche in der Regel geschliffen ist, wird gereinigt und dadurch im Oberflächenbereich 2, in dem die Beschichtung erfolgen soll aktiviert. Dies kann beispielsweise durch eine Behandlung zunächst mit Spiritus und dann mit Aceton erfolgen. Insbesondere sollte eine Aktivierung auf eine Oberflächenenergie von über 72 mN/m erfolgen. Weder vor noch nach der Aktivierung wird das Lagerbauteil 1 mit abrasiven Partikeln gestrahlt und dadurch aufgeraut. Anders als beispielsweise Epoxidharzlack haftet Polyurethan bei erhöhtem Binderanteil auch auf ungestrahlten Stahloberflächen sehr gut, falls die Schichtdicke geeignet gewählt wird. Bei einer Haftfestigkeitsprüfung nach DIN EN ISO 4624 beträgt der Abreißwert auf einer geschliffenen, nicht gestrahlten Stahloberfläche typisch 17-20 MPa, wobei der Bruch beim Abreißen innerhalb der Beschichtung auftritt.

Auf dem aktivierten Oberflächenbereich 2 wird durch einen Lackauftrag beispielsweise mittels einer Farbrolle die Grundschicht 3 ausgebildet. Hierzu werden einem feuchtigkeitshärtenden Einkomponenten-Lack auf Polyurethan-Basis zuvor Zink-Partikel und Vinylphosphonsäure oder Silan zugemischt. Ein derartiger Lack ist leicht und gleichmäßig auftragbar, schnell trocknend, hochhaftfest und chemisch wie auch mechanisch stabil sowie trotz Elastizität durch die Füllstoffe wenig kompressibel. Die Dicke des Lackauftrags wird ca. 40 % größer gewählt als die letztendlich gewünschte Schichtdicke, da bei der Trocknung und Aushärtung der aufgetragenen Lackschicht deren Dicke entsprechend abnimmt. Dies gilt auch für die im Folgenden beschriebene Ausbildung der weiteren Schichten.

Der Einkomponenten-Lack kann folgende Zusammengesetzt aufweisen:
Der Lack enthält einen Lösemittelanteil (z. B. Naphta) von 20 Vol% bis 40 Vol%, insbesondere 30 Vol%.

Nach Abzug des Lösemittelanteils setzt sich der verbleibende Trockenanteil folgendermaßen zusammen, wobei als Bezugsgröße für die Prozentzahlen der gesamte Trockenanteil zugrunde gelegt wird:
- 20-40 Vol%, insbesondere 30 Vol%, einkomponentiges feuchtigkeitshärtendes Polyurethan (Basis aromatisches Polyisocyanat),
- 50-90 Vol% Zink,
- bis zu 10 Vol% Additive (fest oder flüssig); hiervon beispielsweise 0,5-4 Vol% Silan oder 0,5-4 Vol% Vinylphosphonsäure.

Der Zusatz von Vinylphosphonsäure oder Silan ist erforderlich, um die Haftfestigkeit und Elastizität der Grundschicht 3 hinreichend anzuheben, so dass insgesamt ein sehr massives Schichtsystem möglich ist. Alternativ zum Auftrag mit der Farbrolle besteht die Möglichkeit, eine Lackierung mit einer Sprühpistole durchzuführen. Anstelle des Einkomponenten-Lacks kann ein Zweikomponenten-Lack auf Polyurethanbasis verwendet werden. Dies gilt auch für die im Folgenden beschriebene Ausbildung der weiteren Schichten. Dabei wird man in der Regel entweder für alle Schichten einen Einkomponenten-Lack oder für alle Schichten einen Zweikomponenten-Lack verwenden.

Die Grundschicht 3 wird in einem einzigen Arbeitsgang aufgetragen und weist somit lediglich eine Teilschicht auf. Das Aushärten des Lacks erfolgt über eine Vernetzung von funktionalen Enden (Isocyanat) des Polyurethan-Systems.

Nach einem ausreichenden Ablüften, während dessen ein großer Teil des bei der Trocknungsreaktion gebildeten Kohlendioxids aus der Grundschicht 3 entweicht, wird auf der Grundschicht 3 die Zwischenschicht 4 ausgebildet. Der hierfür erforderliche Lackauftrag kann wiederum mittels Farbrolle oder mittels Sprühpistole erfolgen. Als Lack kann ein Feuchtigkeitshärtender Einkomponenten-Lack auf Polyurethanbasis zum Einsatz kommen, dem Zink-Partikel zugesetzt sind. Es kann im Wesentlichen die gleiche Lackzusammensetzung wie für die Ausbildung der Grundschicht 3 verwendet werden. Lediglich der Zinkanteil kann im Vergleich etwas höher gewählt werden, liegt aber wiederum im Bereich von 50-90 Vol%. Analog zur Grundschicht 3 kann auch für die Zwischenschicht 4 alternativ ein Zweikomponenten-Lack auf Polyurethanbasis verwendet werden.

Die Zwischenschicht 4 kann in mehreren Arbeitsgängen aufgetragen werden. Insbesondere kann die Zwischenschicht 4 aus drei Teilschichten ausgebildet werden, wobei jeweils vor dem Auftragen der nächsten Teilschicht auf ein ausreichendes Ablüften geachtet wird, um Blasenbildung zu vermeiden. Durch das Auftragen mehrere Teilschichten wird im Vergleich zur Ausbildung der Zwischenschicht 4 in einem einzigen Arbeitsgang die Durchtrocknung beim Aufbringen der Zwischenschicht 4 verbessert. Außerdem wird die Porendurchgängigkeit verringert und es werden die inneren Spannungen, die im Extremfall zu einer Schichtablösung führen können, reduziert. Dies beruht insbesondere darauf, dass beim Trocknen der Teilschichten entstehendes Kohlendioxid und Lösemittel aus einem dünnen Schichtauftrag besser entweichen können als aus einem dicken Schichtauftrag. Bei Verwendung eines Einkomponenten-Lacks auf Polyurethanbasis kann zudem Wasserdampf für die Vernetzung leichter eindiffundieren.

Als nächstes wird die Deckschicht 5 auf die oberste Lage der Zwischenschicht 4 aufgetragen. Auch hier wird zunächst abgewartet, bis die Zwischenschicht 4 ausreichend abgelüftet ist. Dem für die Ausbildung der Deckschicht 5 vorgesehen Lack wird anstelle von Zink Eisenglimmer in Plättchenform zugemischt. Dabei kann für die Deckschicht 5 als Ausgangsstoff der identische Lack - jedoch ohne Zink - wie bei der Herstellung der Zwischenschicht 4 verwendet werden, d. h. die Lacke können hinsichtlich ihrer Polyurethan-Basis identisch ausgebildet sein. Dies garantiert eine gute Verträglichkeit der Deckschicht 5 mit der Zwischenschicht 4 und vermeidet unerwünschte Reaktionen, die zu einer Schädigung der Deckschicht 5 oder der Zwischenschicht 4 führen könnten. Insbesondere kann eine zur Grundschicht 3 analoge Lackzusammensetzung gewählt werden, die anstelle von Zink Eisenglimmer enthält. Demgemäß kann der Lack 60-90 Vol% Eisenglimmer im Trockenanteil enthalten. Die Deckschicht 5 kann beispielsweise mit der Farbrolle oder der Sprühpistole aufgetragen werden.

In analoger Weise wie für die Zwischenschicht 4 beschrieben wird die Deckschicht 5 in mehreren Arbeitsgängen aufgetragen, d. h. es werden mehrere Teilschichten ausgebildet. Insbesondere werden zwei Teilschichten ausgebildet, wobei vor Ausbildung der zweiten Teilschicht auf ausreichendes Ablüften der ersten Teilschicht geachtet wird.

Auf die Zwischenschicht 4 wird schließlich noch die Versiegelungsschicht 6 aufgebracht, wobei auch hier zunächst ein ausreichendes Ablüften der Zwischenschicht 4 abgewartet wird. Der Auftrag kann wiederum mittels Farbrolle oder mittels Sprühpistole erfolgen. Als Lack kann ein feuchtigkeitshärtender Einkomponenten-Lack auf Polyurethanbasis zum Einsatz kommen, der lediglich einen geringen Anteil an Pigmenten oder sonstigen Partikeln oder keine Pigmente oder sonstige Partikel enthält.

Die Versiegelungsschicht 6 wird in einem Arbeitsgang ausgebildet und weist somit lediglich eine Teilschicht auf.

Nach dem Aushärten sämtlicher Schichten schützt das Schichtsystem das Lagerbauteil 1 sehr wirksam und über einen Jahrzehnte langen Zeitraum vor Korrosion.

Wenn sämtliche Schichten auf derselben Polyurethan-Basis beruhen, können Versprödungen, die durch Diffusion von Lackbestandteilen in die jeweilige Nachbarschicht entstehen können und Spannungen, die zu einem Anheben und Abplatzen von Schichten führen können, besonders zuverlässig vermieden werden.

### Bezugszeichen

- 1: Lagerbauteil
- 2: Oberflächenbereich
- 3: Grundschicht
- 4: Zwischenschicht
- 5: Deckschicht
- 6: Versiegelungsschicht

## Patentansprüche

1. Korrosionsschützendes Schichtsystem mit einer Grundschicht (3), einer Zwischenschicht (4), einer Deckschicht (5) und einer Versiegelungsschicht (6), wobei
- die Grundschicht (3) Polyurethan, Zink und Vinylphosphonsäure oder Silan enthält,
- die Zwischenschicht (4) auf der Grundschicht (3) ausgebildet ist und Polyurethan und Zink enthält,
- die Deckschicht (5) auf der Zwischenschicht (4) ausgebildet ist und Polyurethan und Eisenglimmer enthält und
- die Versiegelungsschicht (6) auf der Deckschicht (5) ausgebildet ist und Polyurethan enthält.

2. Schichtsystem nach Anspruch 1, die Grundschicht (3), die Zwischenschicht (4), die Deckschicht (5) und die Versiegelungsschicht (6) hinsichtlich ihrer Polyurethan-Basis identisch ausgebildet sind.

3. Schichtsystem nach einem der vorhergehenden Ansprüche, wobei die Grundschicht (3), die Zwischenschicht (4), die Deckschicht (5) und die Versiegelungsschicht (6) hinsichtlich wenigstens eines Inhaltsstoffs unterschiedlich zueinander ausgebildet sind.

4. Schichtsystem nach einem der vorhergehenden Ansprüche, wobei die Zwischenschicht (4) und/oder die Deckschicht (5) aus mehreren Teilschichten ausgebildet sind.

5. Schichtsystem nach einem der vorhergehenden Ansprüche, wobei die Versiegelungsschicht (6) einen Anteil an Pigmenten oder sonstigen Partikeln von maximal 10 Vol% aufweist.

6. Schichtsystem nach einem der vorhergehenden Ansprüche, wobei das Schichtsystem eine Gesamtdicke von wenigstens 300 µm aufweist.

7. Schichtsystem nach einem der vorhergehenden Ansprüche, wobei das Schichtsystem eine Gesamtdicke von maximal 600 µm aufweist.

8. Lagerbauteil mit einem Oberflächenbereich (2), der ein korrosionsschützendes Schichtsystem gemäß einem der vorhergehenden Ansprüche aufweist.

9. Lagerbauteil nach Anspruch 8, wobei der Oberflächenbereich (2) nicht gestrahlt ist.

10. Lager mit einem Lagerbauteil (1) nach einem der Ansprüche 8 oder 9.

11. Verfahren zum Schutz eines Lagerbauteils (1) vor Korrosion, wobei
- zur Ausbildung einer Grundschicht (3) auf einen Oberflächenbereich (2) des Lagerbauteils (1) ein erster Lack auf Polyurethan-Basis, dem Zink und Vinylphosphonsäure oder Silan zugesetzt sind, aufgetragen wird,
- zur Ausbildung einer Zwischenschicht (4) auf die Grundschicht (3) ein zweiter Lack auf Polyurethan-Basis, dem Zink zugesetzt ist, aufgetragen wird,
- zur Ausbildung einer Deckschicht (5) auf die Zwischenschicht (4) ein dritter Lack auf Polyurethan-Basis, dem Eisenglimmer zugesetzt ist, aufgetragen wird und
- zur Ausbildung einer Versiegelungsschicht (6) auf die Deckschicht (5) ein vierter Lack auf Polyurethan-Basis aufgetragen wird.

12. Verfahren nach Anspruch 11, wobei zur Ausbildung der Zwischenschicht (4) der zweite Lack und/oder zur Ausbildung der Deckschicht (5) der dritte Lack in mehreren Teilschichten aufgetragen wird.

13. Verfahren nach einem der Ansprüche 11 oder 12, wobei als erster Lack, als zweiter Lack, als dritter Lack und als vierter Lack ein reaktiv vernetzender Einkomponenten-Lack verwendet wird.

14. Verfahren nach einem der Ansprüche 11 bis 13, wobei der erste Lack und/oder der zweite Lack und/oder der dritte Lack und/oder der vierte Lack mittels einer Rolle aufgetragen wird.

## Claims

1. Anticorrosion layer system having a base layer (3), an intermediate layer (4), a covering layer (5) and a sealing layer (6), wherein
- the base layer (3) contains polyurethane, zinc and vinylphosphonic acid or silane,
- the intermediate layer (4) is formed on the base layer (3) and contains polyurethane and zinc,
- the covering layer (5) is formed on the intermediate layer (4) and contains polyurethane and micaceous iron oxide and
- the sealing layer (6) is formed on the covering layer (5) and contains polyurethane.

2. Layer system according to Claim 1, the base layer (3), the intermediate layer (4), the covering layer (5) and the sealing layer (6) have an identical polyurethane basis.

3. Layer system according to any of the preceding claims, wherein the base layer (3), the intermediate layer (4), the covering layer (5) and the sealing layer (6) differ in terms of at least one constituent.

4. Layer system according to any of the preceding claims, wherein the intermediate layer (4) and/or the covering layer (5) are made up of a plurality of sublayers.

5. Layer system according to any of the preceding claims, wherein the sealing layer (6) has a proportion of pigments or other particles of not more than 10% by volume.

6. Layer system according to any of the preceding claims, wherein the layer system has a total thickness of at least 300 µm.

7. Layer system according to any of the preceding claims, wherein the layer system has a total thickness of not more than 600 µm.

8. Bearing component having a surface region (2) which has an anticorrosion layer system according to any of the preceding claims.

9. Bearing component according to Claim 8, wherein the surface region (2) has not been subjected to abrasive blasting.

10. Bearing having a bearing component (1) according to either of Claims 8 and 9.

11. Process for protecting a bearing component (1) against corrosion, wherein
- a first surface coating composition which is based on polyurethane and to which zinc and vinylphosphonic acid or silane have been added is applied on a surface region (2) of the bearing component (1) to form a base layer (3),
- a second surface coating composition which is based on polyurethane and to which zinc has been added is applied to the base layer (3) in order to form an intermediate layer (4),
- a third surface coating composition which is based on polyurethane and to which micaceous iron oxide has been added is applied to the intermediate layer (4) in order to form a covering layer (5) and
- a fourth surface coating composition which is based on polyurethane is applied to the covering layer (5) in order to form a sealing layer (6).

12. Process according to Claim 11, wherein the second surface coating composition to form the intermediate layer (4) and/or the third surface coating composition to form the covering layer (5) are/is applied in a plurality of sublayers.

13. Process according to either of Claims 11 and 12, wherein a reactively crosslinking one-component surface coating composition is used as first surface coating composition, as second surface coating composition, as third surface coating composition and as fourth surface coating composition.

14. Process according to any of Claims 11 to 13, wherein the first surface coating composition and/or the second surface coating composition and/or the third surface coating composition and/or the fourth surface coating composition are/is applied by means of a roller.

## Revendications

1. Système stratifié de protection contre la corrosion, présentant une couche de base (3), une couche intermédiaire (4), une couche de recouvrement (5) et une couche d'imperméabilisation (6),
- la couche de base (3) contenant du polyuréthane, du zinc et de l'acide vinylphosphonique ou du silane,
- la couche intermédiaire (4) étant formée sur la couche de base (3) et contenant du polyuréthane et du zinc,
- la couche de recouvrement (5) étant formée sur la couche intermédiaire (4) et contenant du polyuréthane et du fer micacé,
- la couche d'imperméabilisation (6) étant formée sur la couche de recouvrement (5) et contenant du polyuréthane.

2. Système stratifié selon la revendication 1, la couche de base (3), la couche intermédiaire (4), la couche de recouvrement (5) et la couche d'imperméabilisation (6) sont formées de manière identique en ce qui concerne leur base de polyuréthane.

3. Système stratifié selon l'une quelconque des revendications précédentes, la couche de base (3), la couche intermédiaire (4), la couche de recouvrement (5) et la couche d'imperméabilisation (6) étant formées de manière différente les unes par rapport aux autres en ce qui concerne au moins un constituant.

4. Système stratifié selon l'une quelconque des revendications précédentes, la couche intermédiaire (4) et/ou la couche de recouvrement (5) étant constituée(s) par plusieurs couches partielles.

5. Système stratifié selon l'une quelconque des revendications précédentes, la couche d'imperméabilisation (6) présentant une proportion de pigments ou d'autres particules d'au maximum 10% en volume.

6. Système stratifié selon l'une quelconque des revendications précédentes, le système stratifié présentant une épaisseur totale d'au moins 300 µm.

7. Système stratifié selon l'une quelconque des revendications précédentes, le système stratifié présentant une épaisseur totale d'au maximum 600 µm.

8. Élément de palier présentant une zone surfacique (2) qui présente un système stratifié de protection contre la corrosion selon l'une quelconque des revendications précédentes.

9. Élément de palier selon la revendication 8, la zone surfacique (2) n'étant pas grenaillée.

10. Palier présentant un élément de palier (1) selon l'une quelconque des revendications 8 ou 9.

11. Procédé pour la protection d'un élément de palier (1) contre la corrosion,
- une première laque à base de polyuréthane, à laquelle du zinc, de l'acide vinylphosphonique ou du silane sont ajoutés, étant appliquée sur une zone surfacique (2) de l'élément de palier (1) pour la formation d'une couche de base (3),
- une deuxième laque à base de polyuréthane, à laquelle du zinc est ajouté, étant appliquée sur la couche de base (3) pour la formation d'une couche intermédiaire (4),
- une troisième laque à base de polyuréthane, à laquelle du fer micacé est ajouté, étant appliquée sur la couche intermédiaire (4) pour la formation d'une couche de recouvrement (5) et
- une quatrième couche à base de polyuréthane étant appliquée sur la couche de recouvrement (5) pour la formation d'une couche d'imperméabilisation (6).

12. Procédé selon la revendication 11, la deuxième laque étant appliquée en plusieurs couches partielles pour la formation de la couche intermédiaire (4) et/ou la troisième laque étant appliquée en plusieurs couches partielles pour la formation de la couche de recouvrement (5).

13. Procédé selon l'une quelconque des revendications 11 ou 12, une laque à un composant, réticulant de manière réactive, étant utilisée comme première laque, comme deuxième laque, comme troisième laque et comme quatrième laque.

14. Procédé selon l'une quelconque des revendications 11 à 13, la première laque et/ou la deuxième laque et/ou la troisième laque et/ou la quatrième laque étant appliquée(s) au moyen d'un rouleau.
